# EUROPEAN PATENT SPECIFICATION

(11) **EP 1 401 978 B1**
(45) Date of publication and mention of the grant of the patent: **26.04.2006**
(21) Application number: 02746691.1
(22) Date of filing: 25.06.2002
(51) Int. Cl.: C09J 7/02

(54) **SHEET MATERIAL HAVING A FIBROUS AND ADHESIVE SURFACE**
FOLIENMATERIAL MIT FASERIGER UND KLEBRIGER OBERFLÄCHE
MATERIAU EN FEUILLE POSSEDANT UNE SURFACE FIBREUSE ET ADHESIVE

(30) Priority: 26.06.2001 US 301028 P
(43) Date of publication of application: 31.03.2004
(73) Proprietor: THE PROCTER & GAMBLE COMPANY, Cincinnati, Ohio 45202 (US)
(72) Inventor: DOBRIN, George, Christopher, Mason, OH 45040 (US)
(74) Representative: Borbach, Markus
(86) International application number: PCT/US2002/020187
(87) International publication number: WO 2003/002681

(56) References cited:
- EP-A- 0 708 162
- WO-A-91/13752
- WO-A-97/25892
- US-A- 4 959 265
- US-A- 5 662 758

## Description

### FIELD OF THE INVENTION

The present invention relates to a sheet material having a surface comprising fibers and an adhesive, and to a method for producing the same.

### BACKGROUND OF THE INVENTION

Sheet materials having an adhesive material on one surface are well known in the art, and have been used for decades as tape adhesive fasteners in disposable diapers. An improvement made by Wood et al., U.S. Patent 4,959,265, included an array of bluntly pointed stems onto the sheet that protrude beyond the pressure-sensitive adhesive layer, and which penetrate into openings in a fabric undergarment until the adhesive becomes releasably bonded to the fabric.

Another improved sheet material featured a three-dimensional thermoplastic film having an adhesive applied on one surface, and methods for making the same, as disclosed in U.S. Patent Nos. 5,871,607 (Hamilton et al.), 5,662,758 (Hamilton et al.), 5,968,633 (Hamilton et al.), and 5,965,235 (McGuire et al.). This film is useful as a releasable, vapor-impermeable plastic wrap for sealing and storing food and food containers, and has been sold under the brand name Impress®.

Another use for a sheet material having an adhesive on one surface is for the sealing of articles, including disposable waste articles, such as soiled disposable baby diapers. In one application disclosed in U.S. provisional patent application 60/745,702, the sheet material is formed into a tube of film having the adhesive on the outside surface, and is then folded into pleats inside a casing, from which it can be dispensed for use in the packaging and disposal of such articles.

While these sheet materials have been found commercially useful, there remains a need to reduce the cost and complexity of manufacturing such sheet materials, and to improve their handling, storage-ability, and adhesive performance.

EP 0 708 162 B1 discloses a heat activatable adhesive article comprising a tape composed of a flexible carrier film, which comprises a plurality of recesses and projections.

WO 91/13752 comprises a substrate which comprises a spacing means extending in a direction outwardly from a surface of the substrate which spaces the surface and any substance carried thereon from any other surface. The spacing means is non-deformable in normal use of the substrate.

WO 97/25892 discloses a diaper tab including a facestock film, an adhesive layer and mechanical engagement or closure elements.

### SUMMARY OF THE INVENTION

The sheet material of the present invention comprises a substrate; an adhesive affixed onto the substrate, the adhesive having a surface, and a plurality of fibers extending away from the substrate and beyond the surface of the adhesive, the fibers having an attaching base portion and an extending shank portion that tapers to a distal tip. The adhesive covers at least a portion of the sheet material surface. The fibers extend at least outward from the surface of the adhesive material and away from the substrate of the sheet material. The adhesive enables the sheet material to adhere to any compatible target surface or to the adhesive surface of a second sheet material of the present invention. The plurality of fibers exert a supporting force against the target surface to keep the adhesive surface away from the target surface, or from a second sheet material, when the respective surfaces are brought in confronting position toward each other. The supporting force is a maximum at a standoff force. The fibers will collapse into the adhesive material when an opposing force (also defined as the activation force) exceeds the standoff force of the fibers, whereby the fiber or fibers will collapse and the adhesive will contact the target surface.

The fibers comprise a base and an extending fiber portion. The extending fiber portion is resilient, and can resist the collapse of the fiber in response to a minimal opposing force placed against the fiber substantially perpendicular to the plane of the sheet material. The extending fiber portion must also be sufficiently flexible or collapsible, whereby when the opposing force (activation force) exceeds the stand-off force, the extending fiber portion will collapse, completely or partially, whereby the adhesive material will come into substantially complete contact with the target surface or second sheet material. Preferably, the partially or completely collapsed extending fiber portions collapse into the adhesive.

In a first embodiment, the bases of the fibers are attached directly to the substrate, and the adhesive is positioned on the surface of the substrate between the bases of the fibers. The extending fiber portions of the fibers extend away from the surface of the substrate, and above and beyond the upper surface of the adhesive.

In a second embodiment, the adhesive is positioned on the surface of the substrate, and the bases of the fibers are positioned onto or into the surface of the adhesive material, with the extending fiber portions of the fibers extending above and beyond the surface of the adhesive.

The process of the present invention involves a screen roll process that produces an array of the fibers onto the substrate, and which distributes the adhesive onto the surface of the substrate between the bases of the fibers. The sheet material of the invention can be manufactured according to a combination of processes to apply separately the fibers and the adhesive. The fibers can be applied to the sheet material according to a process comprising the steps of heating a thermally sensitive material sufficiently to reduce its viscosity for processing, and preferably to at least its melting point; depositing the thermally sensitive material onto a substrate in discrete amounts; drawing the deposited material outwardly from the substrate to form a fiber; and terminating the fiber. The fibers can also be applied to the surface of the adhesive material positioned on the substrate according to a process comprising the steps of: providing a substrate comprising an adhesive position on a surface of the substrate, the adhesive having an upper surface; heating a thermally sensitive material sufficiently to reduce its viscosity for processing, and preferably to at least its melting point; depositing the thermally sensitive material onto the upper surface of the adhesive material in discrete amounts; drawing the deposited material outwardly from the substrate to form a fiber; and terminating the fiber. Exemplary processes for applying the fibers are disclosed in commonly assigned U.S. Patent 5,618,583, issued to Young et al, and in commonly assigned U.S. Pat. No. 4,058,274, issued to Thomas et al.

In a preferred embodiment, the sheet material can be used to form a continuous tubular substrate having an adhesive material on the inside surface or outside surface of the tubular film. A preferred use of the tubular film is disclosed in commonly-assigned U.S. provisional patent application 60/745,702 (US docket no. 8384P) filed Dec. 21, 2000, which describes a portable packaging device for manually forming individually packaging articles within a closed tubular sheet, preferably a tubular film having an adhesive on one surface thereof. The packaging device has an inlet end and an outlet end, and comprises a body formed by an inner core having an inlet opening and an outlet opening, and a passageway there between for passing there through an article to be packaged, a casing comprising a surrounding casing wall, and a base wall that joins an end of the surrounding casing wall to the body, the body and the casing defining a storage space and a dispensing opening at the inlet end, wherein the device can retain a length of non-resilient flexible tubular sheet within the storage space. The tubular sheet can be dispensed through the dispensing opening and into the inlet opening of the inner core. The article can be inserted inside the tubular film, and the tubular film can be gathered and closed at each end of the article, thereby forming a closed packaged article. The tubular film can also be used as the tubular film in other diaper disposal devices, such as those described in U.S. Patent 4,869,049, issued to Richards, et al. or U.S. Patent 5,655,680, issued to Asbach et al.

### BRIEF DESCRIPTION OF THE DRAWINGS

While the specification concludes with claims particularly pointing out and distinctly claiming the present invention, it is believed that the invention is better understood from the following description taken in conjunction with the associated drawings, in which like elements are designated by the same reference numeral and:
FIG. 1 shows a sheet material of the present invention.
FIG. 2 shows a cross section of the sheet material of FIG. 1 through line 2-2.
FIG. 3 shows a cross section of an alternative sheet material.
FIG. 4 shows a side elevation view of an apparatus that can be used to produce the fibers on the sheet material of the present invention.
FIG. 5 shows a cross section of yet another embodiment of the sheet material.
FIG. 6 shows a cross section of a sheet material of the present invention that is folded into a series of pleats.
FIG 7 shows a cross section of the sheet material of FIG. 6 as the pleats are being opened.

### DETAILED DESCRIPTION OF THE INVENTION

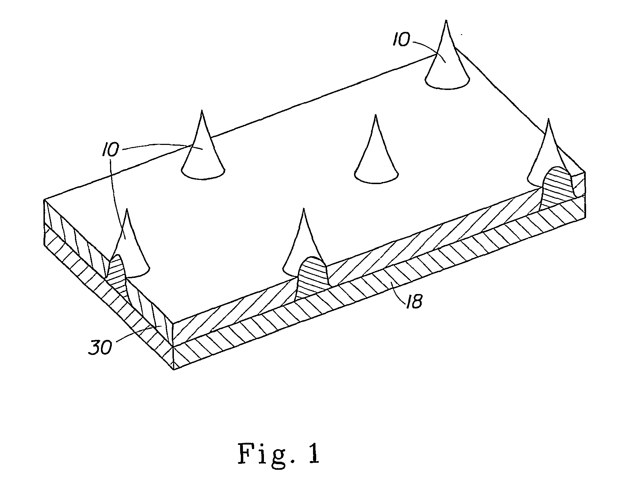

As shown in FIG. 1, the sheet material of the present invention comprises a substrate 18 having a plurality of fibers 10 bonded to at least one surface of the substrate 18. Each fiber 10 can be joined to the substrate 18 in a predetermined pattern. Each of the fibers has a base 12 and an extending fiber portion 14 (herein also referred to as a "shank"). The bases 12 of the fibers 10 contact and are joined to the substrate 18 and support the fiber shanks 14 that project outwardly from the substrate 18 and bases 12. The shanks 14 terminate at the distal end (or distal tip) 16.

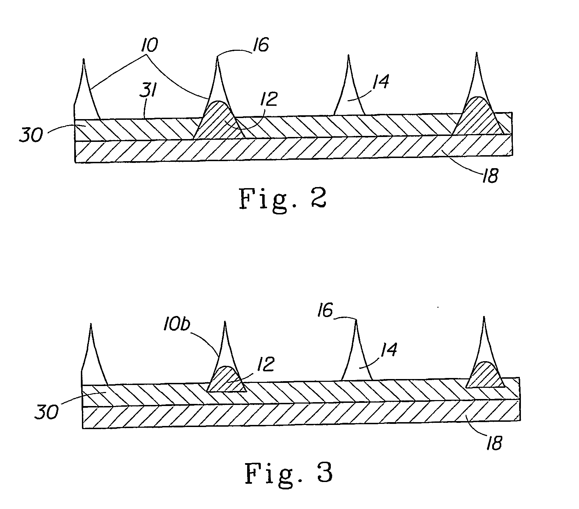

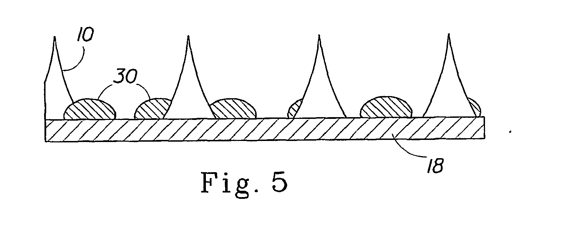

The adhesive 30 is applied on the substrate 18 and is positioned in the spaces between the fibers 10. The adhesive can cover all the space in between the fibers, or only a portion of the spaces between the fibers. The adhesive can be uniformly applied within the space, as shown in FIG. 2, or can be applied intermittently, such as a plurality of dots 33 of adhesive, as shown in FIG. 5. The adhesive can be coated onto the substrate 18 from solution or emulsion, or can be applied by coating a composition that can be polymerized *in situ* to an adhesive state, e.g., by exposure to ultraviolet radiation. The resulting dried or polymerized adhesive preferably is at least 5 microns in depth when applied to a thermoplastic film in order to afford reasonably strong bonding to smooth, hard target surfaces, or to itself, and more preferably is at least 0.025 mm in depth when the substrate is more coarse, or when the target surface is a fabric-like or other foraminous surface.

FIG. 3 shows an alternative embodiment of the invention, wherein the adhesive is positioned on the surface of the substrate 18, and the base 12 of the fiber 10 is positioned onto or into the surface 31 of the adhesive material. The base 12 of the fiber can be positioned flush with the adhesive, but is more preferably positioned slightly below the surface 31 of the adhesive, as shown with fiber 10a in FIG. 3, to anchor the fiber base securely and avoid detachment of the fiber.

The shank of the fiber, as shown in both FIG. 2 and FIG. 3, extends above and beyond the exposed surface 31 of the adhesive material. The shank height, defined as the perpendicular distance from the surface of the adhesive adjacent the fiber to the distal tip, in combination with the standoff force of the fiber, should be sufficient to prevent unintentional or premature contact of the adhesive surface with a second surface. The shank height used can also depend upon the number of and spacing between fibers. The shank height is generally more than 0.5 mil (about 0.013 mm), and generally less than about 20 mil (0.5 mm). Preferably, the shank height is about 1 mil (0.025 mm) to about 10 mils (0.25 mm). The ratio of the average shank height to the average adhesive thickness is preferably about 0.1 to 10, and more preferably about 0.5 to 2.0. The shank height of the plurality of shanks extending above the adhesive surface can be substantially the same or varied.

In certain embodiments, the adhesion of the sheet material to a target surface or to a second sheet material is intended to form an airtight seal. That is, when the substrate is a vapor-impermeable thermoplastic film and the target surface also is a vapor-impermeable surface, the attachment of the sheet material of the invention to the target surface will not permit air to pass underneath and between the sheet material and the target surface. Since the adhesion of the adhesive 30 to the target surface is substantially continuous, air or vapor cannot find an open path through the adhesive seal. This can be accomplished with a sheet material comprising a plurality of dots of adhesive, provided that the spacing of the dots of adhesive is sufficiently close whereby, when the sheet material is pressed or activated against the target surface, the dots of adhesive are forced to spread outwardly and to contact adjacent dots of adhesive, thereby forming a substantially continuous and vapor-impermeable matrix of adhesive between the target surface and the sheet material.

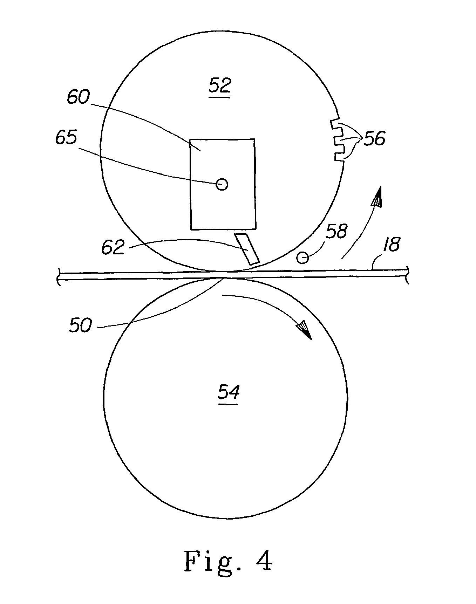

An array of fibers 10 can be provided on the surface of a paper or film (or onto the layer adhesive as shown in FIG. 3) by any suitable apparatus and method, including a preferred method that yields a free formed fiber 10 as described herein below. As used herein, the term "free formed" means a structure that is not removed from a mold cavity or extrusion dye in solid form or with a defined shape. The fibers 10 are deposited onto a substrate in a molten, preferably liquid state, and solidify by cooling, preferably freezing, until rigid, into the desired structure and shape as described hereinafter. The free formed fiber 10 or array of fibers 10 can be produced by manufacturing processes which are similar to those processes commonly known as gravure printing and screen printing. Using the screen printing process, a generally planar substrate 18 having opposed faces is passed between the nip 50 of two generally cylindrical rolls, a screen roll 52 and a backing roll 54, as illustrated in FIG. 4. The rolls 52 and 54 have generally parallel centerlines and are maintained in contacting relationship with the substrate 18 as it passes through the nip 50. The first roll 52, referred to as the screen roll, has a screen 56 that has the desired pattern for the fibers to be deposited on the substrate. The second roll 54, referred to as the backing roll, provides support and reaction against the screen roll 52 to position the substrate 18 against the screen roll 52 as the substrate 18 passes through the nip 50. Thermally sensitive materials, preferably thermoplastic material, from which the fibers 10 are to be formed is supplied from a heated source, such as a trough (not shown). The thermally sensitive material is heated, preferably to at least its melting point, and is introduced onto the screen 56 as the screen roll 52 is rotated about its centerline. A doctor blade 62 forces the thermally sensitive material through the screen 56 onto the substrate 18 in the desired pattern.

As relative movement between the substrate 18 and rolls 52 and 54 continues, the fibers 10 are stretched or drawn in a direction having a vertical component, imparting a length to the fiber 10. When the fiber 10 reaches a desired length, the fiber 10 can be severed by a severing means 58 or the fiber 10 can be stretched until breakage without the use of a dedicated severing means. The fiber 10 then cools, and preferably freezes, into a solid structure.

Upon solidification of the fiber material, if desired, the fibers 10 can then be formed into a non-woven matrix. For example, the fibers can be bonded together to the substrate by using pressure rolls or other methods commonly used in the industry to form non-woven matrices. As used herein, the term "non-woven" means that the fibers 10 are not systematically woven. The fibers 10 instead are formed into a random network.

The substrate 18 of the sheet material should be strong enough to preclude tearing or separating between the individual fibers 10, to provide a surface to which the fibers 10 will readily adhere. The substrate 18 should also be capable of being rolled to support conventional manufacturing processes, be flexible so it can be bent and flexed in a desired configuration, and be able to withstand the heat of the thermoplastic material being deposited thereon without melting or incurring deleterious effects until the fibers solidify. The substrate 18 should also be available in a variety of widths. Suitable substrates 18 include knitted fabrics, woven materials, non-woven materials, rubber, thermoplastic films, and paper.

The base 12 of the fiber 10 is the generally planar portion of the fiber 10 that is attached to the substrate 18 and is contiguous with the proximal end of the shank 14 of the fiber 10. It is not necessary that a demarcation be apparent between the base 12 and the shank 14 of the fiber 10. It is only important that the shank 14 not separate from the base 12 and that the base 12 not separate from the substrate 18, or adhesive surface, during use.

The shape of the footprint of the base 12 on the substrate 18 is not critical and can be amplified in any direction to provide greater structural integrity. As used herein, the term "footprint" refers to the planar contact area of the base on the substrate 18. The aspect ratio (length to width ratio) of the sides of the footprint should not be too great, otherwise the fiber 10 can be unstable when subjected to forces parallel to the shorter side of the footprint. An aspect ratio of less than about 1.5:1 is preferred and a generally circular footprint is more preferred. For the embodiment described herein, a base 12 having a footprint of generally circular shape and approximately 0.02 mm to about 0.32 mm (0.002 to 0.0125 inches) in diameter is suitable. The fibers 10 of this invention range in length from about 0.15 to about 5 mm long. Preferably, their lengths will be about 0.15 to about 0.4 mm.

The array of the fibers 10 can be provided in any pattern, pitch and density as desired. The pattern, pitch and density of the fibers 10 are primarily determined by the mesh of the screen 56 of the screen roll 52. The screen roll screen 56 has a mesh that ranges from about 50 to 200, and in the preferred embodiment, from about 100 to 200. Also, as the diameters of the base 12 and the fiber 10 decrease or the length of the fiber 10 increases, the force needed to cause collapse of the fiber decreases.

It is advantageous to dispose the array of fibers 10 in rows so that each fiber 10 is generally equally spaced from the adjacent fibers. Rows are generally oriented in the machine direction and cross-machine direction according to the manufacturing process described and claimed herein. Generally, each machine direction and cross-machine direction row of fibers 10 will be equally spaced from the adjacent machine direction and cross-machine direction rows of fibers 10, to provide a generally even feel to the touch. Of course, those skilled in the art will recognize that a variety of deposition patterns can be used. The fiber pitch can range from about 2.0 fibers per mm to about 8.0 fibers per mm. The density of the fibers, number of fibers per unit of area, on the sheet material is primarily determined by the mesh size of the screen 56 of the screen roll 52. As the mesh size of the screen 56 increases, the density of the fibers on the sheet material correspondingly increases.

The uniformity (and amount) of the stand-off pressure of the sheet material will improve (and increase) as the mesh increases. If the fibers 10 are spaced too far apart, the sheet will have a low standoff pressure, or the adhesive surface will come into contact with a target surface prematurely in response to even a low activation force. The fibers of the invention will have a density of about 4 to about 62 fibers/mm² and preferably about 16 to about 49 fibers/mm².

The stand-off force of the fibers should be capable of resisting an activation force of at least about 200 grams of force over a 1 square centimeter area (about 200 gm/cm²) of the sheet material, and preferably of at least about 280 gm/cm², more preferably of at least about 500 gm/cm², and most preferably of at least about 630 gm/cm². The amount of activation force required will depend upon the particular application of use for the sheet material.

The thermally sensitive material used to form the fibers should have a melting point low enough to provide for easy processing and relatively high viscosity to provide a tacky and tough consistency at temperatures near the material melting point, so that the fibers 10 can be stretched and formed according to the method of manufacture recited herein. As used herein, "thermally sensitive" refers to the property of a material which gradually changes from the solid state to the liquid state upon the application of heat. Typically, the melting point ranges from 85° C. to 150° C. It is also important that the fibers 10 be viscoelastic, to allow for more variation in the parameters affecting fiber structure. As used herein, the phrase "viscoelastic" describes the mechanical behavior of a material which exhibits viscous and delayed elastic response to stress in addition to instantaneous elasticity. Material having a complex viscosity ranging from about 50 to about 130 Pascal-seconds at the temperature of application to the substrate is suitable.

The fibers 10 are preferentially comprised of a thermoplastic material. The term "thermoplastic" refers to uncrosslinked polymers of a thermally sensitive material which flows under the application of heat or pressure. Hot melt adhesive thermoplastics are well-suited to manufacture the cloth-like fibers of the present invention, particularly in accordance with the process described and claimed below. As used herein, the phrase "hot melt adhesive" refers to a viscoelastic thermoplastic material which retains residual stresses upon solidification from the liquid state. Hot melt adhesives are particularly suitable and preferred, including ethylene vinyl acetate and polyethylene based adhesives. An adhesive having a complex viscosity of about 40-90 Pascal-seconds at about 100° C. has been found to work well. Some commercially available examples of useful hot melt adhesives include PRIMACOR® and EASTOBOND® A3 available from Dow Chemical and Eastman Chemical, respectively.

A preferred substrate material is a thermoplastic non-resilient flexible film. Vapor-impermeable thermoplastic film materials are particularly preferred. The thermoplastic film can be fabricated from a homogeneous resin or blend of different resins. The thermoplastic film can have a single layer or multiple layers within the film structure, whether co-extruded, extrusion-coated, laminated or combined by other known means. Useful resins include, but are not limited to, polyethylenes (PE) (including high density polyethylene, HDPE, low density polyethylene, LDPE and linear low density polyethylene, LLDPE), polypropylene (PP), polyethylene terephthalate (PET), polyvinyl chloride (PVC), polyvinylidene chloride (PVDC), ethylene vinyl acetate (EVA), latex structures, nylon, and surlyn, and mixtures and blends thereof. Polyolefins are generally preferred due to their lower cost and ease of forming but are not necessary to practice the invention, with high-density polyethylene (HDPE) being most preferred to fabricate the film sheet. A preferred resin is a blend of EVA and polypropylene. The thermoplastic film can have a thickness of about 0.1 mil (about 2.54 microns) to about 10 mils (about 0.25 mm), and more preferably a thickness of about 0.5 mil (about 12.7 microns) to about 1 mil (about 0.025 mm).

The adhesive is most preferably a pressure-sensitive adhesive. The pressure-sensitive adhesive should have sufficient adhesion to the target surface to be securely attached, and more preferably sealably attached, thereto. Preferred pressure-sensitive adhesives include natural rubber/resin systems, synthetic rubber/resin systems, and acrylate copolymers. Such pressure-sensitive adhesives are described in Wake: "Adhesion and the Formulation of Adhesives", 2nd Ed., Applied Science Publishers, London (1982). The adhesive is generally coated from solutions and then allowed to dry to a tacky state, but other liquid compositions can be applied and converted to a pressure-sensitive adhesive, e.g., by coating polymerizable liquids as taught in U.S. Pats. 4,181,752 or 4,303,485.

One preferred pressure-sensitive adhesive comprises a tackified synthetic rubber, namely an ABA block copolymer of styrene and isoprene, the styrene blocks being the A blocks and comprising about 21% by weight of the total polymer. The composition of this adhesive was 43 parts "Kraton" 1111, a synthetic block copolymer rubber from Shell Chemical Co.; 51 parts "Wingtack Plus", a hydrocarbon tackifying resin from Goodyear Chemical Co.; and 6 parts "Shellflex" 371 oil from Shell Chemical Co. This composition was coated from a 25% solution of a 4:1 mixture of heptane and toluene.

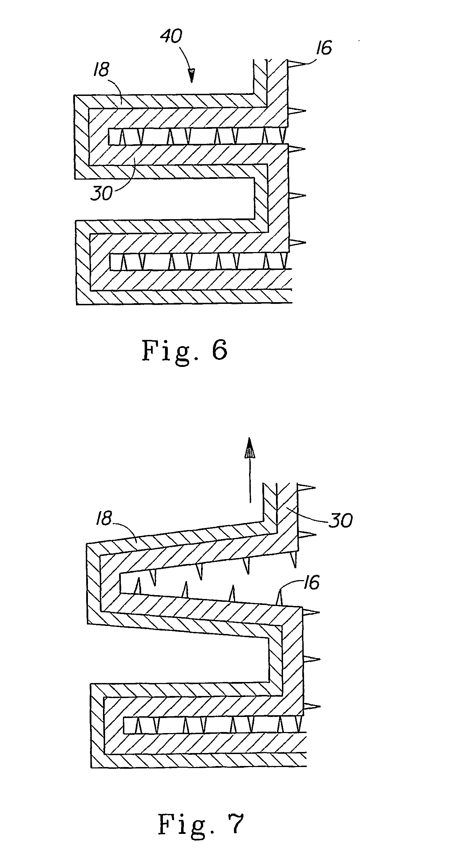

A preferred embodiment of the sheet material comprises a tubular material formed from the sheet. The tube of sheet material having an adhesive on one surface is particularly useful when used with the portable packaging device disclosed in aforementioned U.S. provisional patent application 60/745,702, which dispenses the tubular film from the portable packaging device for packaging an article. The article to be packaged can be placed inside the tubular film, which is then gathered and closed at each end of the article, thereby forming a closed packaged article. The tubular sheet for this use is preferably a tubular thermoplastic film having the adhesive positioned on one side. As described in the aforementioned patent application, the tubular film is placed into the storage space of the portable dispensing device in a pleated pattern, which requires that the tubular film be folded with one adhesive surface facing another adhesive surface, as illustrated in FIG. 6. The layers of tubular film formed into the pleats 40 will be unfolded when dispensed from the storage space of the dispensing device, so long as the force applied to place and form the layers of pleats is below the standoff force. The present sheet material is an advantageous film for forming the tubular film because the slender, pointed distal tips 16, though pressed into and against the opposing adhesive surface, will easily be withdrawn from the opposing adhesive surface as the tubular film is dispensed from the storage space and the pleat is opened, as shown in FIG. 7. Once the tubular film has been dispensed and an article is placed inside the tubular film, the film can be gathered and closed at each end of the article. By twisting the gathered film, or by compressing the gather with an activation force that exceeds the standoff force, the gathered and closed portion is securely sealed.

### EXAMPLES

Provided below is an illustrative non-limiting example of the adhesive sheet material of this invention.

### Example 1

Referring to FIG. 2, a sheet material has a substrate of 12.7 micron-thick thermoplastic comprised of high-density polyethylene. The substrate has attached directly thereto a plurality of fibers having a base of approximately 0.04 mm and extending to a fiber tip, with a fiber length ranging approximately from 0.15 to 0.40 mm. The fibers are position on the substrate with a pitch of 6.1 fibers per mm, resulting in a fiber density of 37.2 fibers per mm². The fibers comprise a low-density polyethylene resin. The adhesive is a pressure-sensitive adhesive, applied uniformly between the fibers at a thickness of about 0.10 mm.

## Claims

1. A sheet material having a surface comprising an adhesive that can be attached to a target surface upon the application of an activation force, comprising:
a. a substrate;
b. an adhesive affixed onto the substrate and having a surface; and
c. a plurality of fibers extending away from the substrate and beyond the surface of the adhesive, the fibers having an attaching base portion and an extending shank portion that tapers to a distal tip,
wherein the plurality of fibers is suitable to be formed into a non-woven matrix and the plurality of fibers exert a stand-off force against a target surface to avoid adhesion of the adhesive to the target surface, and where the application of an activation force that exceeds the stand-off force can collapse the shank portions, whereby the sheet material adheres to the target surface.

2. The sheet material of Claim 1, wherein at least a portion of the shank portions collapse into the adhesive.

3. The sheet material of Claim 1 wherein the substrate is a thermoplastic film.

4. The sheet material of Claim 1 wherein the fiber base is attached to the substrate.

5. The sheet material of Claim 1 wherein the fiber base is attached to the adhesive.

6. The sheet material of Claim 1 wherein the adhesive is a pressure-sensitive adhesive.

7. The sheet material of Claim 1 wherein the shank provides a standoff force of at least 200 gm/cm², more preferably of at least 420 gm/cm², and most preferably of at least 630 gm/cm².

8. The sheet material of Claim 7 wherein the adhesive is a pressure-sensitive adhesive.

9. The sheet material of Claim 8, formed into a tubular film.

## Patentansprüche

1. Flächengebilde mit einer Oberfläche, die einen Klebstoff umfasst, der bei Ausübung einer Aktivierungskraft an einer Zieloberfläche befestigt werden kann, umfassend:
a. ein Substrat;
b. einen Klebstoff, der an dem Substrat haftet und der eine Oberfläche aufweist; und
c. eine Vielzahl von Fasern, die von dem Substrat weg und über die Oberfläche des Klebstoffs hinaus stehen, wobei die Fasern einen Befestigungsbasisabschnitt und einen abstehenden Schaftabschnitt aufweisen, der sich zu seiner distalen Spitze hin verjüngt,
wobei die Vielzahl von Fasern für die Ausbildung zu einer Vliesmatrix geeignet ist und die Vielzahl von Fasern eine Abstand haltende Kraft auf eine Zieloberfläche ausübt, um ein Kleben des Klebstoffs an der Zieloberfläche zu vermeiden, und wobei die Ausübung einer Aktivierungskraft, die größer ist als die Abstand haltende Kraft, die Schaftabschnitte kollabieren lässt, wodurch das Flächengebilde an der Zieloberfläche haftet.

2. Flächengebilde nach Anspruch 1, worin zumindest ein Teil der Schaftabschnitte in den Klebstoff hinein kollabiert.

3. Flächengebilde nach Anspruch 1, worin das Substrat eine thermoplastische Folie ist.

4. Flächengebilde nach Anspruch 1, worin die Faserbasis am Substrat befestigt ist.

5. Flächengebilde nach Anspruch 1, worin die Faserbasis am Klebstoff befestigt ist.

6. Flächengebilde nach Anspruch 1, worin der Klebstoff ein druckempfindlicher Klebstoff ist.

7. Flächengebilde nach Anspruch 1, worin der Schaft eine Abstand haltende Kraft von mindestens etwa 200 g/cm², stärker bevorzugt von mindestens etwa 420 g/cm² und am stärksten bevorzugt von mindestens etwa 630 g/cm² ausübt.

8. Flächengebilde nach Anspruch 7, wobei es sich bei dem Klebstoff um einen druckempfindlichen Klebstoff handelt.

9. Flächengebilde nach Anspruch 8, das zu einer Schlauchfolie ausgebildet ist.

## Revendications

1. Matériau en feuille ayant une surface comprenant un adhésif qui peut être fixé à une surface cible lors de l'application d'une contrainte d'activation, comprenant:
a. un substrat;
b. un adhésif attaché sur le substrat et ayant une surface; et
c. une pluralité de fibres s'étendant à l'écart du substrat et au-delà de la surface de l'adhésif, les fibres ayant une partie de base de fixation et une partie de tige d'extension qui s'effile vers une extrémité distale,
où la pluralité de fibres est appropriée pour être formée en une matrice non-tissée et la pluralité de fibres exerce une contrainte d'éloignement vis-à-vis d'une surface cible pour éviter une adhésion de l'adhésif à la surface cible, et où l'application d'une contrainte d'activation qui dépasse la contrainte d'éloignement peut affaisser les parties de tige, moyennant quoi le matériau en feuille adhère à la surface cible.

2. Matériau en feuille selon la revendication 1, dans lequel au moins une partie des parties de tige s'affaisse dans l'adhésif.

3. Matériau en feuille selon la revendication 1, dans lequel le substrat est une pellicule thermoplastique.

4. Matériau en feuille selon la revendication 1, dans lequel la base de fibre est fixée au substrat.

5. Matériau en feuille selon la revendication 1, dans lequel la base de fibre est fixée à l'adhésif.

6. Matériau en feuille selon la revendication 1, dans lequel l'adhésif est un adhésif sensible à la pression.

7. Matériau en feuille selon la revendication 1, dans lequel la jambe fournit une contrainte d'éloignement d'au moins environ 200 gm/cm², plus préférablement d'au moins environ 420 gm/cm², et le plus préférablement d'au moins environ 630 gm/cm².

8. Matériau en feuille selon la revendication 7, dans lequel l'adhésif est un adhésif sensible à la pression.

9. Matériau en feuille selon la revendication 8, formé en une pellicule tubulaire.
